# EUROPEAN PATENT APPLICATION

(11) **EP 4 015 128 A1**
(43) Date of publication of application: **22.06.2022**
(21) Application number: 22152070.3
(22) Date of filing: 30.10.2019
(51) Int. Cl.: B23K 9/09

(54) **TWO-STAGE PULSE RAMP**

(30) Priority: 30.10.2018 US 201862752421 P; 22.08.2019 US 201916548148
(62) Divisional of application: 19206295.8
(71) Applicant: Lincoln Global, Inc., Santa Fe Springs, CA 90670 (US)
(72) Inventor: FLEMING, Daniel P., Painesville 44077 (US); HENRY, Judah Benjamin, Painesville 44077 (US)
(74) Representative: Grosse Schumacher Knauer von Hirschhausen

(57) **Abstract**

A multi-stage pulse ramp is employed during a welding process. In a first stage (502), a relatively slower increase in welding output is applied to stabilize a droplet. During a second stage (504), a relatively quicker increase is applied up to a peak pulse output to transfer the stabilized droplet.

## Description

### CROSS-REFERENCE TO RELATED APPLICATIONS

This application claims priority to U.S. Provisional Patent Application Serial No. 62/752,421, filed October 30, 2018.

### TECHNICAL FIELD

This invention relates to a system and method of generating a welding output according to a welding waveform according to the preamble of claim 1 and 8 respectively. In general, the present invention relates to welding using a gas metal arc welding (GMAW) process and, in particular, to techniques for stabilizing a droplet for transfer to a weld puddle.

### BACKGROUND

In arc welding, a popular process is pulse welding. For example, gas metal arc welding, such as metal inert gas (MIG) welding, utilizes spaced pulses to first melt an end of an advancing wire electrode and then propel molten metal from the end of the wire through the arc to the workpiece. In ideal conditions, a droplet (e.g. a globule of molten metal) is transferred during each pulse of the pulse welding process. Traditionally, pulse welding processes utilized relatively high voltages and, accordingly, the gap between the end of the electrode and the workpiece would be relatively large. While this limits the incidence of short circuit and the resultant spatter or instability, travel speed is also limited.

There are benefits to operating a welding process, such as pulse welding, at short arc lengths. For example, a shorter arc length promotes lower heat input, lower output voltages, and higher travel speeds. In addition, pulse welding at short arc lengths generally allow for smaller droplet formation and improved weld quality. With shorter arc lengths, short circuits are expected, but a variety of clearing responses can be employed to eliminate the short with minimal spatter.

### SUMMARY

The following summary presents a simplified summary in order to provide a basic understanding of some aspects of the (devices, systems and/or methods) discussed herein. This summary is not an extensive overview of the (devices, systems and/or methods) discussed herein. It is not intended to identify critical elements or to delineate the scope of such (devices, systems and/or methods). Its sole purpose is to present some concepts in a simplified form as a prelude to the more detailed description that is presented later.

In various embodiments, a multi-stage pulse ramp is employed during a welding process. In one example, during a first stage, a relatively slower increase in welding output is applied to stabilize a droplet. During a second stage, a relatively quicker increase is in welding output is applied. In a two-stage ramp, the welding output is increased up to a peak pulse output during the second stage in order to transfer the stabilized droplet. If more than two stages are implemented, each subsequent stage may have a relatively greater change in welding output (e.g. increase slope) than previous stages.

In accordance with one aspect, a system is provided that includes a welding power supply that provides a welding output to an advancing wire electrode to produce an arc between the electrode and a workpiece. The system further includes a waveform generator configured to provide a welding waveform to the welding power supply, the welding power supply modulates the welding output in accordance with the welding waveform. In addition, the system includes a controller. The controller is configured to modify the welding waveform to increase the welding output from a background level to a first target during a first stage, and increase the welding output from the first target to a second target during a second stage.

In accordance with another aspect, a method for generating a welding output according to a welding waveform is provided. The method includes outputting a welding current at a background level to an electrode and outputting a multi-stage pulse at a predetermined time according to the welding waveform. Outputting the multi-stage pulse includes at least increasing the welding current from the background level to a first target and increasing the welding current from the first target to a second target.

According to yet another aspect, a welding device is provided. The welding device includes a waveform generator configured output a welding waveform for a welding process. The welding device also includes a power supply configured to provide a welding power output to an electrode, the power supply modulates the welding power output based on the welding waveform from the waveform generator. In addition, the welding device includes at least one feedback circuit configured to measure at least one characteristic of the welding power output and generate a corresponding feedback signal and a controller configured to adjust operations of at least one of the waveform generator or the power supply based at least in part on the feedback signal from the at least one feedback circuit. The welding waveform is a pulse welding waveform having a multi-stage ramp to a peak output.

These and other aspects of this invention will be evident when viewed in light of the drawings, detailed description and appended claims.

### BRIEF DESCRIPTION OF THE DRAWINGS

The invention may take physical form in certain parts and arrangements of parts, a preferred embodiment of which will be described in detail in the specification and illustrated in the accompanying drawings which form a part hereof, and wherein:
Fig. 1 is a schematic block diagram of an exemplary, non-limiting embodiment of welding system that implements a two-stage pulse ramp according to one or more aspects;
Fig. 2 is graph of an exemplary, non-limiting welding waveform in accordance with one or more aspects;
Fig. 3 is graph of an exemplary, non-limiting welding waveform in accordance with one or more aspects;
Fig. 4 is graph of an exemplary, non-limiting welding waveform in accordance with one or more aspects;
Fig. 5 is graph of an exemplary, non-limiting welding waveform depicting a two-stage pulse ramp in accordance with one or more aspects; and
Fig. 6 is a flow diagram of an exemplary, non-limiting embodiment for a two-stage pulse ramp during a welding process in accordance with one or more aspects.

### DETAILED DESCRIPTION

Embodiments of the invention relate to systems and methods for providing a multi-stage pulse ramp during a welding process. In particular, during a pulse mode welding process, a welding device outputs a pulse of peak current. During this pulse of peak current, a droplet of molten metal which has formed on a consumable electrode (e.g. a welding wire) is transferred to a weld puddle. That is, the droplet detaches from the electrode and travels through an arc to the weld puddle on a workpiece. The pulse typically involves a relatively high current that is rapidly applied (e.g. the current increases rapidly from a lower level to a peak level). A quickly applied, high current may result in spatter or an incomplete transfer of the droplet. To prevent this occurrence, the current may be ramped to the peak current in stages. In each stage, the current is increased at a respective rate to a respective target. The stages may progress from one to the next such that, for a given stage, the rate of increase is greater than previous stages. The target output of a preceding stage becomes a starting output for a subsequent stage. Such stages can be chained together to form a transition from a low level (e.g. background current) to a peak current of the pulse.

In an example having two stages, the current is slowly ramped from a background current to a target current just below a transition current in a first stage. In the second stage, the current is more quickly increased to the peak current. The first stage allows the droplet to stabilize before transfer during or after the second stage.

Various embodiments will now be described with reference to the drawings, wherein like reference numerals are used to refer to like elements throughout. In the following description, for purposes of explanation, numerous specific details are set forth in order to provide a thorough understanding of the embodiments. It may be evident, however, that features described herein can be practiced without these specific details. Additionally, other embodiments are possible and the features described herein are capable of being practiced and carried out in ways other than as described. The terminology and phraseology used herein is employed for the purpose of promoting an understanding of the invention and should not be taken as limiting.

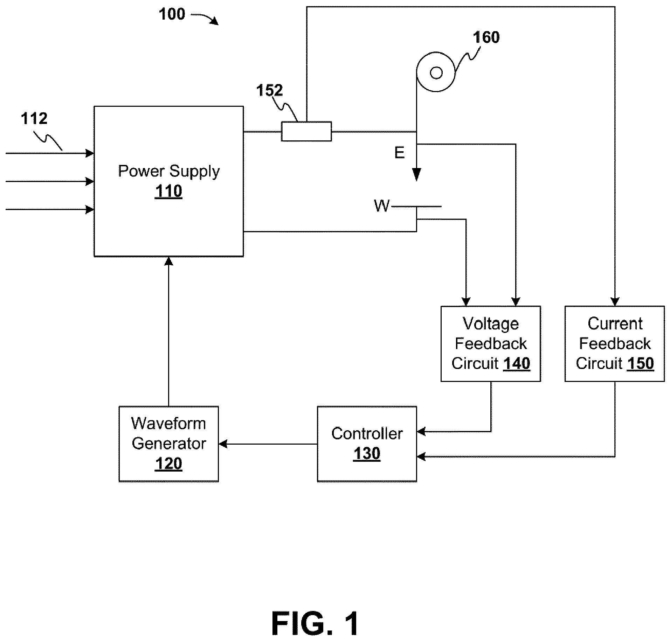

Turning initially to Fig. 1, illustrated is a schematic block diagram of an exemplary, non-limiting welding system 100 configured to execute a two-stage pulse ramp during a welding process. The welding system 100 is operatively coupled to a consumable welding electrode E and a workpiece W to perform the welding process. Welding system 100 includes a power supply 110 capable of converting an input power 112, which may be a three-phrase input, into a welding output power. The power supply may be an inverter-type power converter or a chopper-type power converter, for example. The welding system 100 further includes a wire feeder 160 capable of feeding welding wire through, for example, a welding gun (not shown) that connects the welding wire (e.g., electrode E) to the welding output power.

The system 100 may also include a current shunt 152 (or similar device) operatively connected between the power supply 110 and the electrode E. The current shunt 152 provides a welding output current to a current feedback circuit 150 to measure the welding output current produced by the power supply 110. System 100 further includes a voltage feedback circuit for sensing the welding voltage output by the power supply 110.

The welding system 100 includes a controller 130 that is operatively connected to the voltage feedback circuit 140 and the current feedback circuit 150. The controller 130 may receive sensed current and voltage in the forms of signals representative of the welding output. As shown in Fig. 1, the system 100 may also include a waveform generator 120 coupled to the controller 130. The waveform generator 120 outputs a welding waveform signal to the power supply 110. The power supply 110 generates a modulated welding output (e.g. voltage and current) by converting the input power 112 to a welding output power based on the welding waveform signal from the waveform generator 120. The waveform generator 120 receives command signals from the controller 130 and adapts a welding waveform signal, in real time, based on the command signals. The controller may include logic circuitry, a programmable microprocessor, and computer memory, in accordance with an embodiment.

According to an aspect, the controller 130 may use the voltage signal from the voltage feedback circuit 140, the current signal from the current feedback circuit 150, or a combination of the two signals to determine when a short circuit occurs between the electrode E and the workpiece W, when a short is about to clear and when the short actually clears, during the welding process. Exemplary techniques of determining when a short occurs and when a short clears are describes in U.S. Pat. No. 7,304,269, which is incorporated herein by reference in its entirety. The controller may modify the welding waveform signal from the waveform generator 120 in response to detecting a short circuit. According to an aspect, a partial waveform signal may be output that adds to or combines with the welding waveform signal prior to input to the power supply 110. Thus, the power supply 110 modulates the welding output in accordance with the short response and the welding waveform signal.

It is to be appreciated that welding system 100 can utilize a measured parameter of the welding process in order to adjust a portion of a welding waveform generated by waveform generator 120. For example, the measured parameter can be a derivative of a welding parameter over time during the welding process such as, but not limited to, a derivative of current reading, a derivative of voltage reading, a derivative of resistance reading, a derivative of power, among others. Moreover, the derivative of the welding parameter can be detected in real time. The derivative of a welding parameter can be a trigger for a change in a welding process, a waveform, a portion of a waveform, a combination thereof, among others.

According to an aspect, the waveform generator 120 may output a modified waveform that includes a multi-stage ramp for a pulse. The controller 130 may selectively command the waveform generator 120 to utilize a standard pulse shape or to utilize the multi-stage ramp. In addition, the controller 130 may configure the waveform generator 120 with parameters defining the multi-stage ramp output. The parameters may include one or more transition current levels that separate each stage and one or more rates of change respectively associated with each stage. By way of example, a two-stage ramp output may be defined by a first target level and a first rate of change associated with a first stage and a second target level and a second rate of change associated with a second stage.

The number of stages, and the respectively parameters for each stage, may be determined based on a wire size and/or material. In one example, a wire size and type may be input to controller 130, which utilizes a look-up table or other data structure with predetermined values to select the ramp parameters based on the wire size and type. In another aspect, the parameters (e.g. rates of change) may be determined based on an application of the waveform (i.e. high travel speed, out of position, etc.), a shielding gas utilized, or other factors. In a further example, controller 130 may receive inputs from other sources that provide information indicative of droplet conditions. Based on that input, controller 130 may adjust ramp parameters to improve performance.

Once configured for multi-stage operations, the power supply 110 modulates the welding output based on the waveform generator 120 output. For example, for a two-stage ramp, the power supply 110 increases the welding output to a first target current at a first rate of change. Upon reach the first target current, the power supply 110 transitions to increasing the welding output to a second target level at a second rate of change. Thereafter, the power supply 110 can reduce the welding output back to a background level.

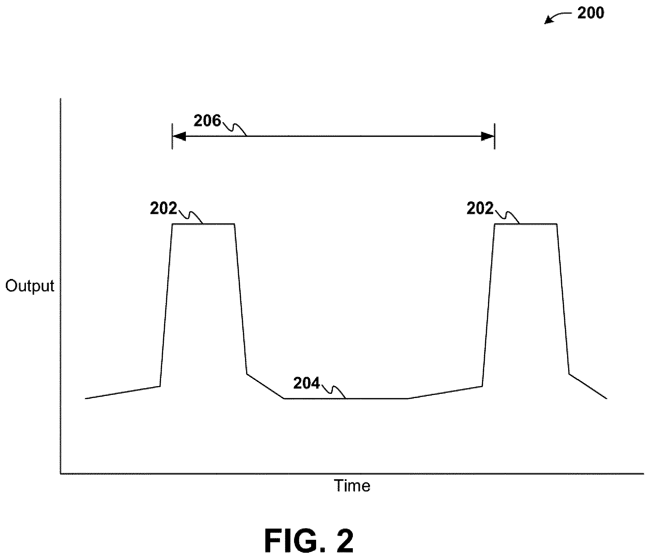

Turning to Figs. 2-4, exemplary waveforms without multi-stage pulse ramps are depicted. In Fig. 2, an ideal welding waveform 200 for a pulse welding process is illustrated. As shown, the waveform includes spaced peak current pulses 202 separated by background current portions 204. During a tailout portion (i.e. between peak 202 and the background current portion 204), the reducing current relaxes a plasma force as the droplet transfers. A time period 206 between pulses may be constant with fixed frequency welding processes.

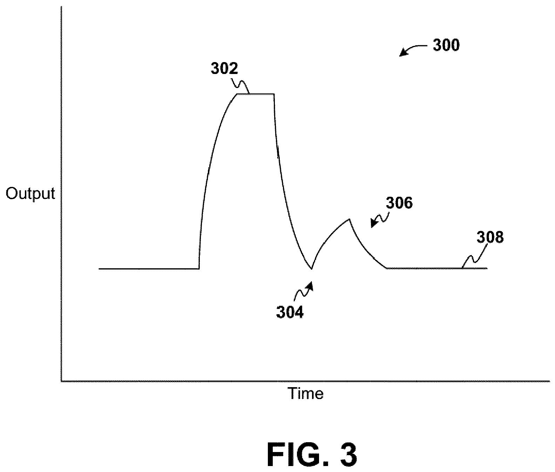

In Fig. 3, an exemplary welding waveform 300 illustrates a high speed pulse mode designed for an extremely short arc length. Waveform 300 also includes a short circuit response to reduce spatter as the short arc length may increase a likelihood of short circuit. As shown in Fig. 3, waveform 300 includes pulse 302, which includes a pulse ramp from a background level to a peak current level. After the peak pulse, waveform 300 reduces the current to relax a plasma force. At 304, a short may occurs as the droplet contacts the weld puddle and the arc collapses. A plasma boost portion 306 to clear the short. The plasma boost 306 pushes the weld puddle away from the electrode to create separation and generate a stable rhythm of the puddle. After the plasma boost the waveform 300 returns to a background level 308.

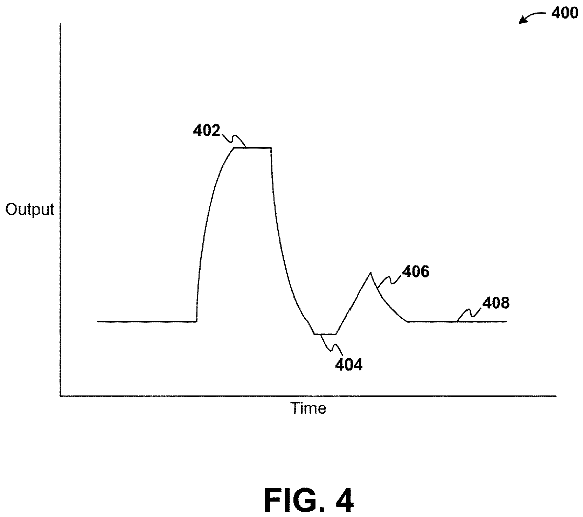

Fig. 4 depicts a waveform 400 that utilizes aspects of surface tension transfer with a high-speed pulse mode similar to waveform 300. Waveform 400 includes pulse portion 402 having a ramp to a peak current followed by a tailout. When a short circuit occurs, a response portion 404 is triggered and the current is held at a low level to allow the short circuit to clear. When the droplet detaches, spatter is reduced due to the low current. After the short clears, a plasma boost 406 is applied before a return to the background level 408.

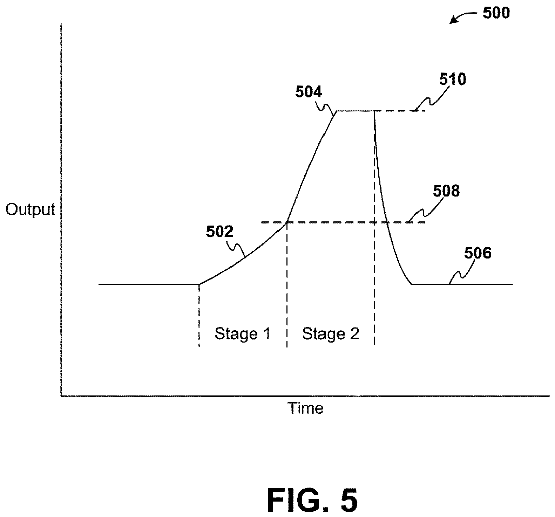

Turning to Fig. 5, a partial waveform 500 is illustrated that depicts a multi-stage pulse ramp according to various aspects of the invention. In the example shown in Fig. 5, waveform 500 includes a two-stage ramp. It is to be appreciated that the ramp may include more than two ramps, e.g. three, four, five, or more ramps. The multi-stage ramp can be utilized with the waveforms depicted in Fig. 2-4 or any other waveform that includes pulses. For instance, the pulses 202, 302, 306, 402 and/or 406 may be implemented with the multi-stage ramp.

In the example of Fig. 5, a first stage 502 involves a transition from a background level 506 to a first target 508. The transition during the first stage 502 has a first rate of change that specifies how quickly the increase to the first target 502 occurs. As utilized herein, the first rate of change may be an average rate of change or may be considered a time window at the end of which the target current is achieved. In other words, the actual ramp during the first stage 502 may be non-linear. Upon reaching the first target 508, the waveform 500 transitions to a second stage 504, which involves an further increase of the welding output up to a second target 510. In one aspect, the second target 510 may correspond to a peak current. The transition from the first target 508 to the second target 510 during the second stage 504 occurs in accordance with a second rate of change.

According to an aspect, the second rate of change may be greater than the first rate of change. The slower change during the first stage 502 allows the droplet to stabilize before peak current is applied during the second stage 504. Thus, the transfer of the droplet improves and spatter is reduced.

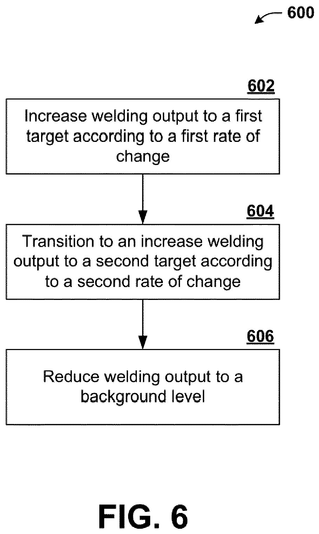

Turning now to Fig. 6, a methodology is described in connection with the illustrated flow chart that relates to multi-stage pulse ramps. The methodology described can be performed by a controller, a microprocessor, a FPGA, or logic circuit (such as controller 130) to execute a multi-stage pulse ramps by a welding system (e.g., system 100) during welding process.

Fig. 6 illustrates a flow chart of a method 600 for implementing a multi-stage pulse ramp during a welding process. In Fig. 6, a two-stage ramp is described; however, it is to be appreciated that multiple stages, with respective targets and rates of change, can be sequenced together in a similar fashion as the two stages described. At 602, a welding output is increased to a first target according to a first rate of change. At 604, the welding output ramp up transitions to an increase to a second target according to a second rate of change. The second rate of change may be greater than the first rate of change. At 606, the welding output is reduced to a background level.

The examples described above detail a multi-stage ramp having two stages. It is to be appreciated that more than two stages may be utilized to increase a welding output from a background level to a peak level. For example, a plurality of stages can implement a ramp up for a welding waveform. The plurality of stages can be interconnected such that a final target of a preceding stage is a starting level for a subsequent stage. Each stage of the plurality of stages can have an associated target level and a rate of change. The number of stages and an ordering of stages can be determined to provide stable formation and transfer of a droplet of molten metal to a weld puddle.

According to one embodiment, a system is provided that includes a welding power supply that provides a welding output to an advancing wire electrode to produce an arc between the electrode and a workpiece. The system also includes a waveform generator configured to provide a welding waveform to the welding power supply, the welding power supply modulates the welding output in accordance with the welding waveform. In addition, the system includes a controller. The controller is configured to increase the welding output from a background level to a first target during a first stage and increase the welding output from the first target to a second target during a second stage.

According to various examples of this embodiment, the welding output is increased during the first stage according to a first rate of change and the welding output is increased during the second stage according to a second rate of change. The second rate of change is greater than the first rate of change. The second rate of change and the first rate of change are determined based on at least one of an application of the waveform or shielding gas. The application of the waveform relates to travel speed or position. The second target is a peak current. The first target is determined based on a size of the electrode or material of the electrode.

According to another embodiment, a method is provided. The method includes outputting a welding current at a background level to an electrode and outputting a multi-stage pulse at a predetermined time according to the welding waveform. Outputting the multi-stage pulse includes at least increasing the welding current from the background level to a first target and increasing the welding current from the first target to a second target.

According to various examples, increasing the welding current from the background level to the first target includes increasing the welding current at a first rate of change and increasing the welding current from the first target to the second target includes increasing the welding current at a second rate of change. The second rate of change is greater than the first rate of change. The method may also include identifying at least one of a characteristic of a welding process employing the welding waveform or a shielding gas used for the welding process. Further, the method includes determining at least one of the first rate of change or the second rate of change based on the characteristic or shielding gas identified. The characteristic of the welding process is at least one of a travel speed or a weld position. In another example, the method includes identifying at least one of a size of the electrode or a material of the electrode. In this example, the method may also include determining the first target based on the size or material of the electrode. The second target is a peak current of the welding waveform.

In yet another embodiment, a welding device is provided. The welding device includes a waveform generator configured output a welding waveform for a welding process. The welding device also includes a power supply configured to provide a welding power output to an electrode. The power supply modulates the welding power output based on the welding waveform from the waveform generator. The welding device includes at least one feedback circuit configured to measure at least one characteristic of the welding power output and generate a corresponding feedback signal and a controller configured to adjust operations of at least one of the waveform generator or the power supply based at least in part on the feedback signal from the at least one feedback circuit. The welding waveform is a pulse welding waveform having a multi-stage ramp to a peak output.

In an example, the multi-stage ramp of the welding waveform includes a plurality of interconnected waveform section having respective rates of change. The multi-stage ramp of the welding waveform includes a first stage providing a transition from a background level to a first target output at a first rate of change. The multi-stage ramp of the welding waveform includes a second stage providing a transition from the first target output to the peak output at a second rate of change. The second rate of change is greater than the first rate of change.

The above examples are merely illustrative of several possible embodiments of various aspects of the present invention, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (e.g., that is functionally equivalent), even though not structurally equivalent to the disclosed structure which performs the function in the illustrated implementations of the invention. In addition although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that are not different from the literal language of the claims, or if they include equivalent structural elements with insubstantial differences from the literal language of the claims.

The best mode for carrying out the invention has been described for purposes of illustrating the best mode known to the applicant at the time. The examples are illustrative only and not meant to limit the invention, as measured by the scope and merit of the claims. The invention has been described with reference to preferred and alternate embodiments. Obviously, modifications and alterations will occur to others upon the reading and understanding of the specification. It is intended to include all such modifications and alterations insofar as they come within the scope of the appended claims or the equivalents thereof.

**REFERENCE NUMERALS**

| | | | |
|---|---|---|---|
| 100 | system | 404 | response portion |
| 110 | power supply | 406 | plasma boost |
| 112 | input power | 408 | background level |
| 120 | waveform generator | 500 | waveform |
| 130 | controller | 502 | first stage |
| 150 | feedback circuit | 504 | second stage |
| 152 | current shunt | 506 | background level |
| 160 | wire feeder | 508 | first target |
| 200 | welding waveform | 510 | second target |
| 202 | current pulse | 600 | method |
| 204 | current portion | 602 | step |
| 206 | time period | 604 | step |
| 300 | waveform | 606 | step |
| 306 | plasma boost portion | | |
| 400 | waveform | E | electrode |
| 402 | pulse portion | W | workpiece |

## Claims

1. A system (100), comprising:
a welding power supply (110) that provides a welding output to an advancing wire electrode (E) to produce an arc between the electrode (E) and a workpiece (W);
a waveform generator (120) configured to provide a welding waveform to the welding power supply (110), the welding power supply (110) modulates the welding output in accordance with the welding waveform (200, 300, 400, 500); and
a controller (130) configured to modify the welding waveform (200, 300, 400, 500) to:
increase the welding output from a background level (506) to a first target (508) during a first stage (502);
**characterized in that** the controller (130) is configured to increase the welding output from the first target (508) to a second target (510) during a second stage (504).

2. The system of claim 1, wherein the welding output is increased during the first stage (502) according to a first rate of change and the welding output is increased during the second stage (504) according to a second rate of change, wherein the first and/or the second rate of change is non-linear.

3. The system of claim 2, wherein the second rate of change is greater than the first rate of change.

4. The system of claim 2 or 3, wherein the second rate of change and the first rate of change are determined based on at least one of an application of the waveform (200, 300, 400, 500) or shielding gas.

5. The system of claim 4, wherein the application of the waveform relates to travel speed or position.

6. The system of one of the claims 1 to 5, wherein the second target (510) is a peak current.

7. The system of one of the claims 1 to 6, wherein the first target (508) is determined based on a size of the electrode € or material of the electro€(E).

8. A method for generating a welding output according to a welding waveform (200, 300, 400, 500), comprising:
outputting a welding current at a background level (506) to an elec€de (E); **characterized by**:
outputting a multi-stage pulse at a predetermined time according to the welding waveform (500), outputting the multi-stage pulse includes at least:
increasing the welding current from the background level (506) to a first target (508); and
increasing the welding current from the first target (508) to a second target (510).

9. The method of claim 8, wherein increasing the welding current from the background level (506) to the first target (508) comprises increasing (602) the welding current at a first rate of change, and
wherein increasing the welding current from the first target (508) to the second target (510) comprises increasing (604) the welding current at a second rate of change; wherein the first and/or the second rate of change is non-linear; wherein preferably: the second rate of change is greater than the first rate of change.

10. The method of claim 9, further comprising identifying at least one of a characteristic of a welding process employing the welding waveform or a shielding gas used for the welding process, such as e.g. a travel speed or a weld position; and preferably further comprising determining at least one of the first rate of change or the second rate of change based on the characteristic or shielding gas identified.

11. The method of one of the claims 8 to 10, further comprising identifying at least one of a size of the electrode (E) or a material of the electrode (E); further preferably comprising determining the first target (508) based on the size or material of the electrode (E).

12. The method of one of the claims 8 to 11, wherein the second target (510) is a peak current of the welding waveform (200, 300, 400, 500).

13. A welding device, in particular according to one of the preceding claims, comprising:
a waveform generator (120) configured output a welding waveform (200, 300, 400, 500) for a welding process;
a power supply (110) configured to provide a welding power output to an electrode (E), the power supply (110) modulates the welding power output based on the welding waveform (200, 300, 400, 500) from the waveform generator (120);
at least one feedback circuit (150) configured to measure at least one characteristic of the welding power output and generate a corresponding feedback signal; **characterized by**
a controller (130) configured to adjust operations of at least one of the waveform generator (120) or the power supply (110) based at least in part on the feedback signal from the at least one feedback circuit (150),
wherein the welding waveform (500) is a pulse welding waveform having a multi-stage ramp to a peak output, wherein the ramp is non-linear.

14. The welding device of claim 13, wherein the multi-stage ramp of the welding waveform (500) includes a plurality of interconnected waveform section having respective rates of change.

15. The welding device of claim 14, wherein the multi-stage ramp of the welding waveform includes a first stage (502) providing a transition from a background level (506) to a first target output (508) at a first rate of change; wherein preferably:
the multi-stage ramp of the welding waveform includes a second stage providing a transition from the first target output to the peak output at a second rate of change, and wherein the second rate of change is greater than the first rate of change.
